# EUROPÄISCHE PATENTSCHRIFT

(11) **EP 0 630 357 B1**
(45) Veröffentlichungstag und Bekanntmachung des Hinweises auf die Patenterteilung: **05.07.1995**
(21) Anmeldenummer: 93905319.5
(22) Anmeldetag: 08.03.1993
(51) Int. Cl.: C02F 1/70

(54) **KATALYTISCHES WIRBELSCHICHTVERFAHREN ZUR BEHANDLUNG WÄSSRIGER FLÜSSIGKEITEN**
CATALYTIC FLUIDISED BED PROCESS FOR TREATING AQUEOUS LIQUIDS
PROCEDE CATALYTIQUE PAR LIT FLUIDISE TRAITER DES LIQUIDES AQUEUX

(30) Priorität: 13.03.1992 DE 4207962
(43) Veröffentlichungstag der Anmeldung: 28.12.1994
(73) Patentinhaber: Solvay Umweltchemie GmbH, D-30173 Hannover (DE)
(72) Erfinder: BISCHOFF, Michael, D-3300 Braunschweig (DE); BONSE, Dirk, D-3160 Lehrte (DE); SELL, Michael, D-3150 Peine (DE)
(74) Vertreter: Lauer, Dieter, Dr.
(86) Internationale Anmeldenummer: EP9300524
(87) Internationale Veröffentlichungsnummer: WO9317973

(56) Entgegenhaltungen:
- EP-A- 0 345 822
- EP-A- 0 359 074
- WO-A-87/00517
- PATENT ABSTRACTS OF JAPAN vol. 9, no. 283 (C-313)(2006) 9. November 1985

## Beschreibung

Die Erfindung bezieht sich auf ein Verfahren zur katalytischen Behandlung Keime enthaltender wäßriger Flüssigkeiten.

Es sind eine Reihe von Verfahren bekannt, in welchen wäßrige Flüssigkeiten katalytisch behandelt werden. Beispielsweise kann es wünschenswert sein, den Sauerstoffgehalt wäßriger Flüssigkeiten zu vermindern oder zu entfernen. So ist es bekannt, in Wasser, das als Kühlmittel in technischen Anlagen verwendet wird, den Sauerstoffgehalt zu senken, da dadurch die Korosivität des Wassers verringert wird. Auch in Trinkwasser oder Wässern, die für die Herstellung von Nahrungs- und Genußmitteln verwendet wird, beispielsweise zur Herstellung von alkoholischen oder nichtalkoholischen Getränken, wird der Sauerstoffgehalt mit Vorteil reduziert. Weiterhin ist es bekannt, daß der Nitrit- und/oder Nitratgehalt in Trink-, Brauch- oder Abwasser verringert werden muß. Ein entsprechendes katalytisch arbeitendes Verfahren wird in der EP-A-0 359 074 (US-A 4 990 266) beschrieben.

Die katalytische Behandlung zur Verringerung des Sauerstoff-, Nitrit- und/oder Nitratgehalts in wäßrigen Flüssigkeiten beispielsweise wird so durchgeführt, daß man die wäßrige Flüssigkeit mit Wasserstoff versetzt und dann durch einen geeigneten Katalysator leitet. Gewöhnlich verwendet man Trägerkatalysatoren, die ein oder mehrere Platingruppenmetalle sowie gegebenenfalls zusätzlich andere Metalle, z.B. Metalle der Kupfergruppe, enthalten.

Problematisch ist, das wäßrige Flüssigkeiten, z.B. Brunnenwasser, Trinkwasser, Brauchwasser oder Abwasser, die katalytisch behandelt werden sollen, gewöhnlich Mikroorganismen enthalten. Es ist dann eine allmähliche Verkeimung des Katalysators zu beobachten. Die Behandlung der wäßrigen Flüssigkeiten, z. B. wie in der EP-A 359 074 beschrieben mit UV-Licht, bringt keine völlige Abhilfe. Andere Maßnahmen, z. B. Zusatz von Bioziden, sind im Trinkwasserbereich nicht angebracht.

Die japanische Offenlegungsschrift JP 60/129188 (Patent Abstracts of Japan 9, Nr. 283, C-313 (1985)), offenbart die ZerSetzung reduzierender Substanzen wie Hydrazin, Hydrazid oder Hydrazon im Dampfkessel-Abwasser, wobei der Katalysator im Festbett oder im Wirbelbett gehalten wird.

Die EP-A 345 822 offenbart Katalysatorharze hoher Stabilität und langfristiger katalytischer Aktivität. Die Harze können zur Entfernung des Sauerstoffs aus Trink-, Meer- und Brackwasser sowie auch aus Kondensaten verwendet werden.

Aufgabe der Erfindung ist, ein Verfahren anzugeben, mit welchem die katalytische Behandlung von wäßrigen Flüssigkeiten ohne Verkeimung des Katalysators möglich ist. Diese Aufgabe wird durch das in den Ansprüchen angegebene Verfahren gelöst.

Überraschend wurde gefunden, daß eine Verkeimung des Katalysators bei der katalytischen Behandlung Keime enthaltender wäßriger Flüssigkeiten verhindert werden kann, wenn das Verfahren in der Wirbelschicht durchgeführt wird. Das erfindungsgemäße Verfahren zur katalytischen Behandlung Keime enthaltender wäßriger Flüssigkeiten, wobei man die wäßrige Flüssigkeit durch einen Katalysator leitet, ist dadurch gekennzeichnet, daß man partikelförmige Trägerkatalysatoren mit einer Partikelgröße von 0,1 bis 10 mm verwendet und die katalytische Behandlung in der Wirbelschicht in Abwesenheit von Hydrazin, Hydrazid und Hydrazon und unter Durchfluß der zu behandelnden Flüssigkeit durch einen Reaktor durchführt.

Vorzugsweise verwendet man Trägerkatalysatoren, insbesondere kugelförmige Trägerkatalysatoren. Der Durchmesser beträgt vorzugsweise 0,1 mm bis 1,0 mm, besonders bevorzugt 0,3 bis 0,8 mm.

Das erfindungsgemäße Verfahren wird besonders vorteilhaft bei solchen wäßrigen Flüssigkeiten angewendet, die zur Herstellung von Nahrungs- oder Genußmitteln verwendet werden, beispielsweise zur Behandlung von Trinkwasser oder Brunnenwasser für die Herstellung von Nahrungsmitteln oder von Getränken, beispielsweise alkoholischen oder nichtalkoholischen Getränken.

Gemäß einer Variante wendet man das Verfahren auf die reduktive Entfernung von Sauerstoff aus wäßrigen Flüssigkeiten an. Man setzt dann vorzugsweise Trägerkatalysatoren ein, die ein oder mehrere Platingruppenmetalle, z.B. Platin oder Palladium, und gegebenenfalls andere die katalytische Aktivität fördernde Zusätze auf üblichem keramischen Trägermaterial, z.B. Siliciumdioxid, Alumosilikat oder Aluminiumoxid aufweisen.

Gemäß einer anderen Variante wendet man das erfindungsgemäße Verfahren auf die Entfernung oder Verminderung des Nitrit- und/oder Nitratgehaltes von entsprechend belastetem Wasser unter selektiver Stickstoff-Bildung an. Man verwendet zur Behandlung von nur Nitrit belastetem Wasser einen Katalysator, dessen Metallkomponente aus Palladium und/oder Rhodium besteht. Sofern das zu behandelnde Wasser auch Nitrat enthält, wendet man einen Trägerkatalysator an, dessen Metallkomponente aus Palladium und einem Metall der Kupfergruppe oder aus Rhodium und gegebenenfalls Palladium besteht.

Das erfindungsgemäße Verfahren kann natürlich auch bei der katalytischen Behandlung wäßriger Flüssigkeiten zu anderen Zwecken angewendet werden. Die DE-OS 39 06 781 beschreibt beispielsweise ein Verfahren, in welchem der Nitrit- bzw. Nitratgehalt quantitativ zu Ammonium umgewandelt wird. Dies geschieht mit Trägerkatalysatoren, die einen mit Platin und/oder Iridium und gegebenenfalls zusätzlich mit Nickel oder Kupfer imprägnierten porösen Träger umfassen. Das Verfahren wird in der Analytik angewendet.

Die folgenden Beispiele sollen die Erfindung weiter erläutern, ohne sie in ihrem Umfang einzuschränken.

### Beispiel 1:

### Herstellung des Katalysators

### 1.1. Herstellung des Trägers:

Angewendet wurde die Methode der Aufbaugranulation. 140 kg Keimbildner (Unterkorn aus einer früheren Aufbaugranulation mit 70 Gew.-% Aluminiumoxid und 30 Gew.-% Wasser, Partikelgröße kleiner 0,5 mm) wurden mit 3 l Wasser besprüht.
Anschließend wurden 105 kg einer Aluminiumoxidmischung hergestellt, indem amorphe, hochdisperse Tonerde (Handelsprodukt HLS^{R} der Firma Martinswerk, Bergheim) und Aluminiumoxid vom Böhmit-Typ (Handelprodukt Condea Pural SB^{R} der Firma Condea, Brunsbüttel) im Gewichtsverhältnis von 40:12,5 miteinander vermischt wurden. Dieses Aluminiumoxidgemisch wurde zusammen mit den 140 kg Keimbildner in einen Drehteller gegeben. Der rotierenden Masse wurden im Verlauf von 4 Stunden etwa 32,6 kg Wasser zugesprüht.
Dann wurden noch einmal 132 kg der vorstehend beschriebenen Aluminiumoxidmischung mit dem angegebenen Gewichtsverhältnis von amorphen Aluminiumoxid und Aluminiumoxid vom Böhmit-Typ der im Drehteller befindlichen Masse zugefügt. Im Verlauf von 2,5 Stunden wurden dann weitere 42 kg Wasser der rotierenden Masse zugesprüht. Dann wurde die Masse noch 20 Minuten nachgerollt und 16 Stunden lang im ruhenden Drehteller gealtert.
Unter Zudosieren von 3 kg Wasser wurde die gealterte Masse noch einmal 15 Minuten lang im Drehteller gerollt und anschließend abgesiebt. Unterkorn (Partikeldurchmesser kleiner 0,5 mm) und Überkorn (Partikeldurchmesser größer 0,68 mm) nach Zerkleinern wurden als Keimbildner in eine spätere Aufbaugranulation rückgeführt.
Die Fraktion mit einer Partikelgröße von 0,5 bis 0,68 mm wurde dann 16 Stunden lang bei 150 °C getrocknet.

### Ausbeute:

188 kg Trockengut der Zusammensetzung 85 Gew.-% Aluminiumoxid, Restwasser.
Dem vorgetrockneten Gut wurden dann 10 kg Material entnommen, welches zunächst 4 Stunden lang bei 600 °C vorgetrocknet und dann 5 Stunden lang bei 1050 °C kalziniert wurde.

### Ausbeute:

8,5 kg kugelförmiges Aluminiumoxid, bestehend aus den Modifikationen "theta" und "kappa" mit Spuren der Modifikation "alpha". Das Material war frei von den Modifikationen "gamma" und "delta".

### Maximum des Porendurchmessers:

850 Å. Die Durchmesser der Poren verteilen sich auf einen Bereich zwischen etwa 60 Å und 1800 Å.
Spezifische Oberfläche, gemessen nach der Quecksilber-Porosimetrie-Methode: 45 m²/g,
Porenvolumen: 0,40 ml/g
Mittlerer Porendurchmesser: 356 Å.

### 1.2. Aufbringen der katalytisch aktiven Komponente:

Verwendet wurde das gemäß Beispiel 1 hergestellte Trägermaterial. Es wurde eine als besonders günstig ermittelte Fraktion mit einem Korngrößenbereich von 400 bis 680 Mikrometer, die einen Ober- bzw. Unterkornanteil von jeweils kleiner 3 % aufwies, verwendet. Die Korngrößenverteilung innerhalb des Bereichs von 400 bis 680 Mikrometer folgte der Normalverteilung.
Die Herstellung der Katalysatoren erfolgte durch Aufbringen der katalytisch aktiven Metallverbindungen auf das Trägermaterial, wobei nach einer der nachfolgenden Methoden gearbeitet wurde.
a) In 219 ml einer wäßrigen Tetraammoniumpalladium(II)-Hydroxid-Lösung mit einem Palladiumgehalt von 2,74 g/l, d.h. einem Gesamtgehalt von 0,6 g Palladium, wurden in einem 250 ml-Rundkolben 30 g des gemäß Beispiel 1 hergestellten Trägermaterials der obenangegebenen Fraktion eingebracht. Die Lösung wurde über einen Zeitraum von 2 Stunden bei 60 °C und 30 mbar bis zur Trockne eingeengt, der erhaltene imprägnierte Träger bei 110 °C 1 Stunde lang getrocknet und der getrocknete Träger noch 0,5 Stunden bei 550 °C kalziniert. Unter analogen Bedingungen erfolgte die Aufbringung von Kupfer. Zur Herstellung der Kupfersalzlösung wurden 0,47 g Kupfer(II)acetat-Monohydrat (entsprechend 0,15 g Kupfer) in 100 ml vollentsalztem Wasser gelöst. Der imprägnierte Träger wurde dann 2 Stunden lang bei 110 °C getrocknet. Zur Reduktion der Metalle wurde der imprägnierte und getrocknete Träger 8 Stunden bei 350 °C in einem von außen beheizten Quarzrohr einer Wasserstoffatmosphäre ausgesetzt.
   Der fertige Katalysator besaß laut Analyse einen Palladiumgehalt von 2,0 ± 0,05 Gew.-% und einen Kupfergehalt von 0,5 ± 0,02 Gew.-%. Die relative Abriebzahl entsprach der Abriebzahl des Trägermaterials.
b) In eine Lösung von 1,68 g Palladiumdichlorid, das entspricht 1,0 g Palladium, in 11,75 ml 1-molarer Salzsäure und 22,7 ml Aceton wurden in einem 250 ml-Rundkolben 50,42 g des gemäß Beispiel 1 hergestellten Trägermaterials der obenangegebenen Fraktion eingebracht. Die Lösung wurde 30 Minuten lang, angeschlossen an einen Rotationsverdampfer, gerührt. Die Lösungsmittel wurden über einen Zeitraum von 60 Minuten bei 60 °C und 50 mbar abgedampft. Der mit Palladium imprägnierte Träger wurde dann 1 Stunde lang bei 150 °C getrocknet und 0,5 Stunden bei 550 °C kalziniert. Zur Aufbringung des Kupfers wurde der mit Palladium imprägnierte Träger in eine Lösung von 0,79 g Kupfer(II)acetat-Monohydrat, das entspricht 0,25 g Kupfer, in 30 ml Wasser gegeben und wie vorstehend beschrieben im Rotationsverdampfer behandelt. Der mit Palladium und Kupfer imprägnierte Träger wurde dann 1 Stunde lang bei 100 °C getrocknet und schließlich, wie unter a) beschrieben, reduziert.
Die Analyse entsprach den nach der Methode a) erhaltenen Werten.

### Beispiel 2:

Anwendung des gemäß Beispiel 1 hergestellten Palladium und Kupfer enthaltenden Trägerkatalysators zur Entfernung von Sauerstoff und Nitrat aus Wasser in der Wirbelschicht .

### Verwendete Apparatur:

Eine Rohwasserleitung führte zunächst in einen Schwebstofffilter und dann in eine Drückerhöhungsvorrichtung. Aus der Druckerhöhungsvorrichtung führte eine Leitung in einen Begasungsreaktor. In diesem Begasungsrektor konnte über Silikonmembranen Wasserstoff in das Wasser eingetragen werden. Der Begasungsreaktor war mit einem Reaktor verbunden, welche der katalytische Sauerstoff und Nitratabbau durchgeführt wurde. In diesem Reaktor waren 22 kg des gemäß Beispiel 1 hergestellten, Palladium und Kupfer enthaltenden Trägerkatalysators enthalten waren. Eine aus dem Reaktor führende Auslaßleitung für das behandelte Wasser führte in einen Schwebstoffilter. Das den Schwebstoffilter verlassende Wasser konnte dann als Reinwasser dem jeweiligen Anwendungszweck zugeführt werden.

### Versuchsdurchführung:

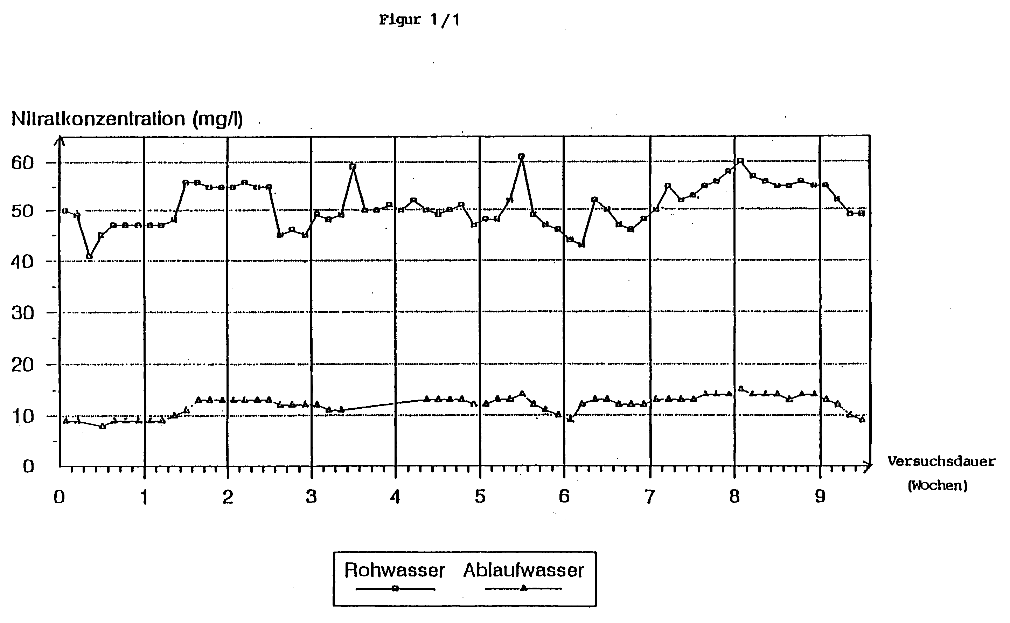

Der Versuch wurde während einer Zeitdauer von über 9 Wochen in einem niedersächsischen Wasserwerk durchgeführt. Der Nitratgehalt des Rohwassers (Grundwasser) schwankte zwischen 40 mg und 60 mg pro Liter. Der Sauerstoffgehalt betrug 4,2 mg/l. Die Temperatur des Rohwassers betrug 11 °C.
Das Rohwasser wurde zunächst durch den Schwebstoffilter geführt und dann in der Druckerhöhungsvorrichtung auf einen Wasserdruck von 5 bar gebracht. Im Begasungsreaktor wurde das Wasser mit Wasserstoff begast. Das mit Wasserstoff beladene Wasser wurde mit einer Durchflußmenge von 2000 Liter pro Stunde durch den Reaktor geleitet, in welchem das Trägerkatalysatormaterial in der Wirbelschicht gehalten wurde. Sowohl der Nitratgehalt des zu behandelnden nitratbelasteten Grundwassers als auch der Nitrat-Gehalt des behandelten Grundwassers wurden über den Zeitraum von mehr als 9 Wochen aufgezeichnet. Der Figur 1 können die Nitrat-Konzentrationen des unbehandelten bzw. des behandelten Grundwassers, die über eine Vielzahl von Messungen ermittelt wurden, entnommen werden. Die Nitrat-Abbauleistung konnte zu 3,5 g Nitrat pro Kilogramm Katalysator und Stunde ermittelt werden.
Einige Analysendaten des unbehandelten und behandelten Grundwassers sind in der folgenden Tabelle zusammengestellt.

**Tabelle 1**

| Analysendaten des unbehandelten bzw. behandelten Grundwassers | | |
|---|---|---|
| Parameter | unbehandeltes Grundwasser | behandeltes Grundwasser |
| pH-Wert | 7,10 | 7,65 |
| O₂-Gehalt | 4,2 mg/l | < 20 Mikrogramm |
| Nitrat | 59 mg/l | 11 mg/l |
| Nitrit | < 0,1 mg/l | < 0,1 mg/l |
| Chlorid | 102 mg/l | 101 mg/l |
| Sulfat | 149 mg/l | 152 mg/l |
| Ammonium | < 0,05 mg/l | < 0,05 mg/l |
| Calcium | 172 mg/l | 175 mg/l |
| Eisen | < 0,05 mg/l | < 0,05 mg/l |
| Mangan | < 0,05 mg/l | < 0,05 mg/l |

Wie die Figur 1 beweist, ist der Katalysator über Monate hinweg standfest. Eine Verkeimung des Katalysators tritt nicht auf.

## Patentansprüche

1. Verfahren zur katalytischen Behandlung Keime enthaltender wäßriger Flüssigkeiten, wobei man die wäßrige Flüssigkeit durch einen Katalysator leitet, dadurch gekennzeichnet, daß man partikelförmige Katalysatoren mit einer Partikelgröße von 0,1 bis 10 mm verwendet und die katalytische Behandlung in der Wirbelschicht in Abwesenheit von Hydrazin, Hydrazid oder Hydrazon unter Durchfluß der zu behandelnden Flüssigkeit durch einen Reaktor durchführt.

2. Verfahren nach Anspruch 1, dadurch gekennzeichnet, daß man kugelförmige Katalysatoren mit einem Durchmesser von 0,3 bis 0,8 mm verwendet.

3. Verfahren nach Anspruch 1 oder 2, dadurch gekennzeichnet, daß die katalytische Behandlung die reduktive Entfernung von Sauerstoff ist.

4. Verfahren nach Anspruch 1 oder 2, dadurch gekennzeichnet, daß die katalytische Behandlung die reduktive Entfernung von Nitrit und/oder Nitrat unter selektiver Stickstoff-Bildung ist.

## Claims

1. A method for the catalytic treatment of aqueous liquids containing germs, in which the aqueous liquid is passed through a catalyst, characterised in that particulate catalysts having a particle size of 0.1 to 10 mm are used and the catalytic treatment is effected in the fluidised bed in the absence of hydrazine, hydrazide or hydrazone, with the liquid to be treated flowing through a reactor.

2. A method according to Claim 1, characterised in that spherical catalysts having a diameter of 0.3 to 0.8 mm are used.

3. A method according to Claim 1 or 2, characterised in that the catalytic treatment is the reductive removal of oxygen.

4. A method according to Claim 1 or 2, characterised in that the catalytic treatment is the reductive removal of nitrite and/or nitrate with selective nitrogen formation.

## Revendications

1. Procédé de traitement catalytique de liquides aqueux contenant des germes, selon lequel on envoie le liquide aqueux à travers un catalyseur, procédé caractérisé en ce qu'on utilise des catalyseurs particulaires ayant des grosseurs de particules de 0,1 à 10 mm et en ce qu'on effectue le traitement catalytique en lit fluidisé en l'absence d'hydrazine, d'hydrazide ou d'hydrazone, en faisant circuler à travers un réacteur le liquide à traiter.

2. Procédé selon la revendication 1, caractérisé en ce qu'on utilise des catalyseurs de forme sphérique ayant un diamètre de 0,3 à 0,8 mm.

3. Procédé selon la revendication 1 ou 2, caractérisé en ce que le traitement catalytique est l'élimination réductrice de l'oxygène.

4. Procédé selon la revendication 1 ou 2, caractérisé en ce que le traitement catalytique est l'élimination réductrice de nitrite et/ou de nitrate avec formation sélective d'azote.
